# EUROPÄISCHE PATENTSCHRIFT

(11) **EP 1 666 913 B1**
(45) Veröffentlichungstag und Bekanntmachung des Hinweises auf die Patenterteilung: **15.10.2008**
(21) Anmeldenummer: 05023918.5
(22) Anmeldetag: 03.11.2005
(51) Int. Cl.: G01S 7/481

(54) **Optischer sensor**
Optical sensor
Capteur optique

(30) Priorität: 19.11.2004 DE 102004055851
(43) Veröffentlichungstag der Anmeldung: 07.06.2006
(73) Patentinhaber: Leuze electronic GmbH + Co KG, 73277 Owen/Teck (DE)
(72) Erfinder: Droemer, Jörg, 72574 Bad Urach-Wittlingen (DE); Aldiek, Norbert, 73230 Kirchheim/Teck (DE)
(74) Vertreter: Ruckh, Rainer Gerhard

(56) Entgegenhaltungen:
- EP-A1- 1 148 345
- EP-A2- 0 897 121
- DE-A1- 4 340 756
- DE-A1- 10 326 848
- DE-U1- 9 401 413
- DE-U1- 9 421 457
- JP-A- 8 054 286

## Beschreibung

Die Erfindung betrifft einen optischen Sensor gemäß dem Oberbegriff des Anspruchs 1.

Ein derartiger optischer Sensor ist aus der DE 94 01 413U1 bekannt. Der optische Sensor weist einen Sendelichtstrahlen emittierenden Sender und einen Empfangslichtstrahlen empfangenden Empfänger auf, welche ein Distanzsensorelement bilden, welches vorzugsweise nach dem Laufzeitverfahren arbeitet. Dementsprechend wird aus der Laufzeit der Sendelichtstrahlen zu einem Objekt und der vom Objekt zum Empfänger zurückreflektierten Empfangslichtstrahlen die Objektdistanz berechnet. Die Sendelichtstrahlen und die Empfangslichtstrahlen werden über eine Ablenkeinheit in Form eines rotierenden Umlenkspiegels abgelenkt, wodurch die Sendelichtstrahlen periodisch einen flächigen Überwachungsbereich überstreichen. Dabei werden die Sendelichtstrahlen durch ein Austrittsfenster in der Frontwand des Gehäuses geführt, wobei die Größe des Austrittsfensters in Ablenkrichtung der Sendelichtstrahlen die Größe des Überwachungsbereichs bestimmt.

Das Austrittsfenster weist eine vorgegebene rotationssymmetrische Krümmung auf, wobei im Krümmungsmittelpunkt des Austrittsfensters der Umlenkspiegel der Ablenkeinheit angeordnet ist. Durch diese Ausbildung des Austrittsfensters ist gewährleistet, dass in jeder Ablenkposition des Umlenkspiegels die Sendelichtstrahlen jeweils auf ein Segment des Austrittsfensters mit gleicher Krümmung auftreffen.

Damit wirkt sich die Strahlverformung der Sendelichtstrahlen und auch der Empfangslichtstrahlen bei Durchtritt des Austrittsfensters in jeder Winkelposition des Umlenkspiegels gleich aus.

Jedoch ist hierbei nachteilig, dass durch die Verzerrung der Wellenfronten der Empfangslichtstrahlen, die bei deren Durchgang durch das Austrittsfenster entsteht, insbesondere auch der Strahlquerschnitt der Empfangslichtstrahlen bewirkt wird. Der Strahlquerschnitt der Empfangslichtstrahlen ist damit erheblich größer als die lichtempfindliche Fläche des Empfängers, das heißt es gelangt systembedingt nur noch ein kleiner Bruchteil der Empfangslichtstrahlen auf den Empfänger, was zu einer unerwünschten Verminderung der Nachweisempfindlichkeit des optischen Sensors führt.

Prinzipiell könnte dieser Effekt dadurch kompensiert werden, dass die lichtempfindliche Fläche des Empfänger vergrößert wird. Derartige Maßnahmen würden jedoch die Herstellkosten des optischen Sensors erheblich vergrößern, da derart großflächige Empfänger sehr kostenintensiv sind.

Die EP 0 897 121 A2 betrifft eine Vorrichtung zum Orten von in einen zu überwachenden Raumbereich eindringenden Objekten, mit einem Gehäuse, das einen Sender und einen Empfänger für optische Strahlung sowie eine drehbare optische Umlenkeinrichtung einerseits mit einem um eine Drehachse drehbaren und gegenüber dieser geneigten Sendeumlenkspiegel für ein ausfallendes Strahlenbündel durch ein Fenster im Gehäuse in den durch das ausfallende Strahlenbündel zu überstreichenden Raumbereich und andererseits mit einem Empfangsumlenkspiegel zum Lenken eines aus dem Raumbereich reflektierten, durch das Fenster einfallenden Strahlenbündels zum Empfänger enthält. Das Fenster ist in Form eines Kugelausschnitts ausgebildet, dessen Mittelpunkt der Schnittpunkt der Drehachse mit den optischen Achsen des ein- und ausfallenden Strahlenbündels ist, wobei der Sende- und der dazu senkrecht Empfangsumlenkspiegel in einem Winkel von 45° zur Drehachse angeordnet sind.

Der Erfindung liegt die Aufgabe zugrunde, einen optischen Sensor der eingangs genannten Art mit verbesserten optischen Eigenschaften bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Erfassung von Objekten in einem Überwachungsbereich und weist einen Sendelichtstrahlen emittierenden Sender und einen Empfangslichtstrahlen empfangenden Empfänger auf. Die Sendelichtstrahlen und die Empfangslichtstrahlen sind über eine Ablenkeinheit geführt und durchsetzen ein Austrittsfenster in einer Frontwand eines Gehäuses. Weiterhin weist der erfindungsgemäße optische Sensor eine Auswerteeinheit auf, in welcher in Abhängigkeit der Empfangssignale am Ausgang des Empfängers ein Objektfeststellungssignal generiert wird. Die Ablenkeinheit weist einen drehbaren Umlenkspiegel auf, dessen Spiegelfläche eine vorgegebene Krümmung zur Kompensation von Verzerrungen des Strahlquerschnitts der Empfangslichtstrahlen, welche durch den Durchtritt der Empfangslichtstrahlen durch das Austrittsfenster bedingt sind, aufweist. Der Umlenkspiegel weist einen aus Glas bestehenden Grundkörper auf, auf dessen Oberfläche ein Aufsatz aus Diacryl aufgebracht ist, dessen Oberfläche die gekrümmte Spiegelfläche bildet.

Mit der erfindungsgemäßen Ausbildung des Umlenkspiegels wird die Nachweisempfindlichkeit des optischen Sensors erheblich erhöht. Wesentlich hierbei ist, dass die Krümmung der Spiegelfläche als Korrekturelement Bestandteil der Ablenkeinheit ist, mit welcher nicht nur die Sendelichtstrahlen abgelenkt sondern auch die Empfangslichtstrahlen in Richtung des Empfängers geführt werden. In jeder Ablenkposition des Umlenkspiegels werden somit die durch den Durchtritt des Austrittsfensters verzerrten Empfangslichtstrahlen in gleicher Weise korrigiert. Damit werden Strahlaufweitungen der Empfangslichtstrahlen, die durch das Austrittsfenster bedingt sind, rückgängig gemacht, wodurch ein kleiner Empfangslichtfleck generiert wird, mit welchem der Empfänger nahezu vollständig ausgeleuchtet wird.

Wesentlich hierbei ist, dass das Austrittsfenster zumindest näherungsweise rotationssymmetrisch ausgebildet ist, wobei die Drehachse des Umlenkspiegels mit der Symmetrieachse des Austrittsfensters zusammenfällt. Dabei kann das Austrittsfenster beispielsweise die Form der Mantelfläche eines Zylinders oder Kegels aufweisen. Durch die rotationssymmetrische Anordnung des Austrittsfensters bezüglich des Umlenkspiegels ist gewährleistet, dass in jeder Ablenkposition des Umlenkspiegels die Empfangslichtstrahlen in gleicher Weise durch das Austrittsfenster verzerrt werden. Die Korrektur der Wellenfronten der Empfangslichtstrahlen mit der gewünschten Spiegelfläche des Umlenkspiegels erfolgt damit in gleicher Weise für beliebige Ablenkpositionen des Umlenkspiegel. Dann ist eine systematische, gleich bleibende Korrekturwirkung über den gesamten Überwachungsbereich gewährleistet.

Die Krümmung der Spiegelfläche des Umlenkspiegels wird bei bekanntem Strahlengang der Empfangslichtstrahlen über das Austrittsfenster und den Umlenkspiegel zum Empfänger und bekannten geometrischen Daten des Austrittsfensters rechnerisch ermittelt. Bei Kenntnis dieser Daten kann die Krümmung der Spiegelfläche so dimensioniert werden, dass die Verzerrungen der Empfangslichtstrahlen durch das Austrittsfenster kompensiert werden.

An die Herstellung des Umlenkspiegels mit der gekrümmten Spiegelfläche sind hohe Anforderungen zu stellen, damit die Krümmung der Spiegelfläche exakt den berechneten Werten entspricht. Hierzu besteht der Umlenkspiegel, erfindungsgemäß aus einem Grundkörper aus Glas mit einer ebenen Oberfläche, auf welche ein Aufsatz aus Diacryl mit der gekrümmten Spiegelfläche aufgebracht ist. Der Grundkörper aus Glas, im einfachsten Fall eine Glasplatte, kann einfach und kostengünstig hergestellt werden und weist zudem eine hohe Stabilität und Formgenauigkeit auf. Der Aufsatz aus Diacryl wird dadurch hergestellt, dass auf die Glasplatte eine Form mit einem Hohlraum aufgesetzt wird, welcher eine der Krümmung der Spiegelfläche des Umlenkspiegels entsprechende Kontur aufweist. Das Diacryl wird in flüssiger Form in den Hohlraum eingespritzt und dann mit UV-Strahlung ausgehärtet. Die Krümmung der Spiegelfläche des Umlenkspiegels kann auf diese Weise hochgenau und formstabil hergestellt werden.

Die Nachweisempfindlichkeit des optischen Sensors wird durch den Einsatz einer zugeordneten Empfangsoptik weiter verbessert, welche bevorzugt als Cassegrain Objektiv ausgebildet ist. Durch die Einarbeitung von Nah- und Fernbereichszonen in die Empfangsoptik können gleichermaßen in kleinen und großen Distanzen zum optischen Sensor angeordnete Objekte sicher erkannt werden.

In einer besonders vorteilhaften Ausführungsform bilden der Sender und der Empfänger ein Distanzsensorelement. Der optische Sensor bildet dann einen Flächendistanzsensor, mit welchem die Distanzen von Objekten in einem flächigen Überwachungsbereich bestimmt werden können.

Die Erfindung wird im Nachstehenden anhand der Zeichnungen erläutert. Es zeigen:
- Figur 1:: Anordnung der optischen Komponenten eines optischen Sensors zur Erfassung von Objekten in einem Überwachungsbereich.
- Figur 2:: Querschnitt durch den optischen Sensor gemäß Figur 1.
- Figur 3:: Aufbau eines Umlenkspiegels für einen optischen Sensor gemäß den Figuren 1 und 2.
- Figur 4:: Schematische Darstellung einer Vorrichtung zur Herstellung eines Umlenkspiegels für den optischen Sensor gemäß den Figuren 1 und 2.

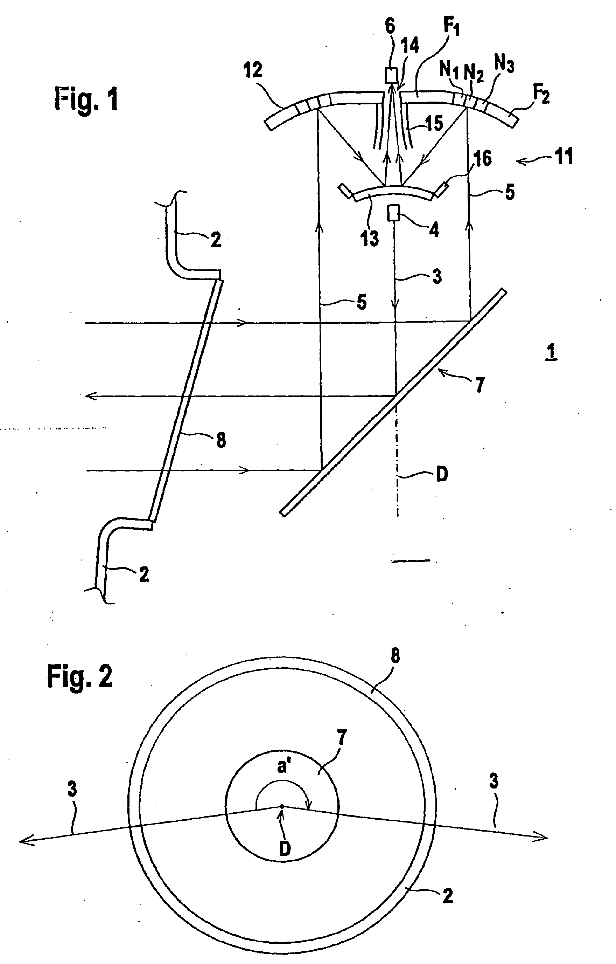

Die Figuren 1 und 2 zeigen schematisch den Aufbau eines optischen Sensors 1 zur Erfassung von Objekten in einem Überwachungsbereich.

Der optische Sensor 1 ist in einem Gehäuse 2 integriert, welches in Figur 1 in Ansätzen und in Figur 2 in einer Querschnittsdarstellung dargestellt ist. Das Gehäuse 2 besteht aus lichtundurchlässigem Material wie zum Beispiel Metall oder Kunststoff.

In dem optischen Sensor 1 sind ein Sendelichtstrahlen 3 emittierender Sender 4 und ein Empfangslichtstrahlen 5 empfangender Empfänger 6 angeordnet, welche ein Distanzsensorelement bilden. Der Sender 4 besteht bevorzugt aus einer Laserdiode, der Empfänger 6 ist von einer Photodiode oder dergleichen gebildet. Die Distanzmessung kann insbesondere nach dem Prinzip der Impuls-Laufzeitmessung erfolgen. In diesem Fall sendet der Sender 4 Sendelichtstrahlen 3 in Form von Lichtimpulsen aus.

Die Distanz eines Objektes wird dann durch Messung der Laufzeit der Lichtimpulse zum Objekt und zurück zum Empfänger 6 ermittelt. Alternativ kann die Distanzmessung nach dem Prinzip der Phasenmessung erfolgen. In diesem Fall wird den vom Sender 4 ausgesandten Sendelichtstrahlen 3 eine Amplitudenmodulation aufgeprägt. Die vom Objekt zum Empfänger 6 zurückreflektierten Empfangslichtstrahlen 5 weisen dieselbe Amplitudenmodulation auf, die jedoch aufgrund der Lichtlaufzeit um einem Phasenwinkel bezüglich den Sendelichtstrahlen 3 phasenverschoben ist. Diese Phasenverschiebung wird als Maß für die Objektdistanz ausgewertet.

Die Auswertung der Empfangssignale zur Bestimmung der Objektdistanzen erfolgt in einer nicht dargestellten Auswerteeinheit, die von einem Mikroprozessor oder dergleichen gebildet ist. In der Auswerteeinheit wird dabei ein Objektfeststellungssignal generiert. Dieses kann im einfachsten Fall von einem analogen Distanzwert gebildet sein. Alternativ wird in der Auswerteeinheit ein binäres Schaltsignal als Objektfeststellungssignal generiert, in dem die Distanzwerte mit einem Schwellwert bewertet werden. In diesem Fall geben die Schaltzustände des Schaltsignals an, ob sich ein Objekt innerhalb des Überwachungsbereichs befindet oder nicht.

Die Sendelichtstrahlen 3 werden über eine Ablenkeinheit, bestehend aus einem motorisch getriebenen, um eine Drehachse D drehbaren Umlenkspiegel 7 periodisch abgelenkt, so dass die Sendelichtstrahlen 3 periodisch einen flächigen Überwachungsbereich überstreichen. Die von einem Objekt zurückreflektierten Empfangslichtstrahlen 5 werden über denselben Umlenkspiegel 7 zum Empfänger 6 geführt.

Wie aus Figur 1 ersichtlich, sind der Sender 4 und der Empfänger 6 oberhalb des Umlenkspiegels 7 angeordnet. Die Drehachse des Umlenkspiegels 7 verläuft in vertikaler Richtung, wobei der Sender 4 und der Empfänger 6 in der Drehachse liegend stationär innerhalb des Gehäuses 2 angeordnet sind. Der Umlenkspiegel 7 sitzt auf einem nicht dargestellten Sockel auf, der mittels eines ebenfalls nicht dargestellten Motors in eine Drehbewegung versetzt wird.

Wie aus Figur 1 weiter ersichtlich, ist der Normalenvektor des Umlenkspiegels 7 um einen Winkel von 45° zur vertikalen Drehachse geneigt. Die vom Sender 4 emittierten Sendelichtstrahlen 3 verlaufen in vertikaler Richtung auf das Zentrum des Umlenkspiegels 7 zu und werden am Umlenkspiegel 7 so abgelenkt, dass diese in horizontaler Richtung verlaufend ein Austrittsfenster 8 in der Frontwand des Gehäuses 2 durchsetzen und damit in den Überwachungsbereich geführt werden. Die von einem Objekt zurückreflektierten Empfangslichtstrahlen 5 durchsetzen ebenfalls das Austrittsfenster 8 und werden dann am Umlenkspiegel 7 abgelenkt, so dass sie in vertikaler Richtung verlaufend zum Empfänger 6 geführt werden.

Wie aus Figur 2 ersichtlich, erstreckt sich das Austrittsfenster 8 in Umfangsrichtung des Gehäuses 2 über einen Winkelbereich, der im vorliegenden Fall im Bereich 180° ≤ α ≤ 190° liegt. Die Ausdehnung des Austrittsfensters 8 in Umfangsrichtung des Gehäuses 2 definiert die Größe des mit den Sendelichtstrahlen 3 abgetasteten Überwachungsbereichs. Für den Fall, dass α = 180° beträgt, wird mit den Sendelichtstrahlen 3 eine Halbebene periodisch abgetastet, wobei die Abtastfrequenz der Sendelichtstrahlen 3 durch die Drehzahl des Antriebs und damit des Umlenkspiegels 7 definiert ist.

Das Austrittsfenster 8 ist rotationssymmetrisch zur Drehachse ausgebildet. Im vorliegenden Fall bildet das Austrittsfenster 8 ein Segment eines Kegelmantels. Prinzipiell ist auch ein zylindrisches Austrittsfenster 8 denkbar.

Bei Durchtritt der Empfangslichtstrahlen 5 durch das Austrittsfenster 8 werden die Wellenfronten entsprechend der kegelförmigen Ausbildung des Austrittsfensters 8 in vorgegebener Weise verzerrt. Da das Austrittsfenster 8 rotationssymmetrisch zur Drehachse des Umlenkspiegels 7 angeordnet ist, ergibt sich für jede Ablenkposition der in den Überwachungsbereich geführten Sendelichtstrahlen 3 dieselbe Verzerrung der Empfangslichtstrahlen 5.

Zur Kompensation der Verzerrungen der Wellenfronten der Empfangslichtstrahlen 5 weist die Spiegelfläche des Umlenkspiegels 7 nicht die Form einer Ebene, sondern eine konkave Krümmung auf. Die Krümmung des Umlenkspiegels 7 wird rechnerisch aus dem bekannten Strahlengang der Empfangslichtstrahlen 5 über das Austrittsfenster 8 und den Umlenkspiegel 7 zum Empfänger 6 und der bekannten Geometrie des Austrittsfensters 8 ermittelt. Durch die Kompensation der Verzerrungen der Empfangslichtstrahlen 5 bei Durchtritt durch das Austrittsfenster 8 mittels der gekrümmten Spiegelfläche des Umlenkspiegels 7 wird ein kleiner, homogener Empfangslichtfleck erzeugt, welcher an die Größe der lichtempfindlichen Fläche des Empfängers 6 angepasst ist.

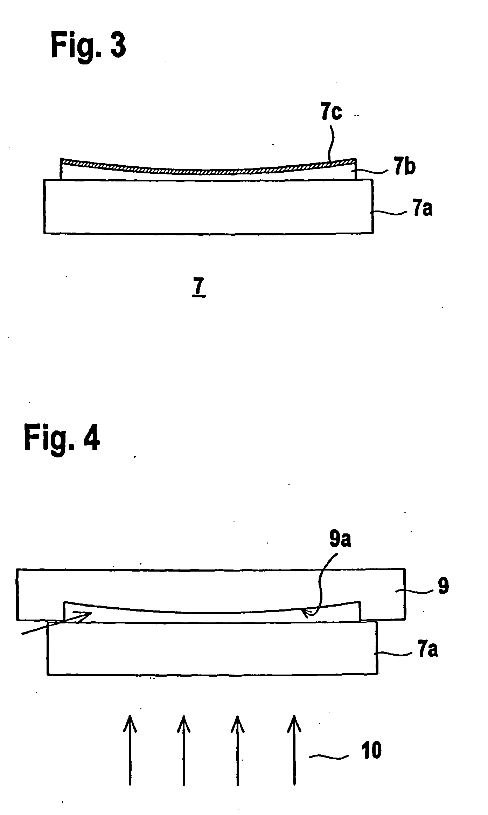

Der Aufbau des Umlenkspiegels 7 ist in Figur 3 schematisch dargestellt. Der Umlenkspiegel 7 besteht aus einem Grundkörper 7a aus Glas und einem Aufsatz 7b auf Diacryl, dessen gekrümmte Oberfläche zur Ausbildung der Spiegelfläche mit einer reflektierenden Schicht 7c versehen ist.

Der Grundkörper 7a aus Glas besteht aus einer Glasplatte mit ovalem Querschnitt. Die Glasplatte weist eine ebene Unter- und Oberseite auf. Auf die Oberseite der Glasplatte ist der Aufsatz 7b aus Acryl aufgebracht, wobei dessen Oberseite die konkave Krümmung zur Kompensation der Strahlverzerrungen der Empfangslichtstrahlen 5 aufweist. Der Aufsatz erstreckt sich nahezu über die gesamte Oberfläche der Glasplatte. Lediglich im Randbereich der Glasplatte liegt deren Oberseite frei.

Figur 4 zeigt schematisch den Aufbau einer Vorrichtung zur Herstellung des Umlenkspiegels 7 gemäß Figur 3. Auf die Oberseite der Glasplatte wird zunächst eine Form 9 aufgesetzt, die eine Aussparung 9a an ihrer Unterseite aufweist, welche der Form des herzustellenden Aufsatzes 7b entspricht. Die Form 9 sitzt dabei mit ihren Rändern dicht auf den Rändern der Glasplatte auf. Auf diese Weise entsteht ein Hohlraum zwischen den Rändern der Aussparung und der Oberseite der Glasplatte. In diesen Hohlraum wird über eine Einführöffnung flüssiges Diacryl eingespritzt, wobei die Einspritzrichtung in Figur 4 mit einem Pfeil gekennzeichnet ist.

Das eingespritzte Diacryl wird dann mit UV-Licht 10 ausgehärtet, wodurch sich dieses mit der Glasplatte zur Ausbildung des Aufsatzes 7b verbindet. Anschließend wird die Form wieder von der Glasplatte abgenommen. Danach kann die reflektierende Schicht auf die gekrümmte Oberseite des Aufsatzes 7b aufgebracht werden.

Zur Fokussierung der Empfangslichtstrahlen 5 ist dem Empfänger 6 eine als Cassegrain-Objektiv ausgebildete Empfangsoptik 11 vorgeordnet. Die Empfangsoptik 11 weist einen konkav gekrümmten Eintrittsspiegel 12 und einen weiteren, dem Eintrittsspiegel 12 gegenüberliegenden, konvex gekrümmten Spiegel 13 auf. Die Zentren des Eintrittsspiegels 12 und des Spiegels 13 liegen in der Drehachse des Umlenkspiegels 7 und sind rotationssymmetrisch an dieser Drehachse ausgebildet.

Der Eintrittsspiegel 12 weist eine zentrale, kreisförmige Bohrung 14 auf. Der Empfänger 6 liegt hinter der Bohrung 14 in Abstand zum Spiegel 13. Der Spiegel 13 ist als Hyperboloidspiegel ausgebildet. An den Rand des Spiegels 13 schließt eine Lichtfalle in Form eines ringförmigen lichtundurchlässigen Stegs 16 an. Die Komponenten der Empfangsoptik 11 bestehen aus Kunststoff-Spritzteilen, wobei auf den Eintrittsspiegel 12 und den Spiegel 13 zur Ausbildung von Spiegelflächen reflektierende Schichtstrukturen aufgebracht sind.

Wie aus Figur 1 ersichtlich, werden die am Umlenkspiegel 7 reflektierten Empfangslichtstrahlen 5 zunächst auf den Eintrittsspiegel 12 geführt und von dort zum Spiegel 13 reflektiert. Die am Spiegel 13 reflektierten Empfangslichtstrahlen 5 gelangen dann durch den Tubus 15 zum Empfänger 6. Durch den Tubus 15 und die Lichtfalle wird verhindert, dass Störlicht, welches nicht über den Umlenkspiegel 7 geführt ist sondern schräg auf die Empfangsoptik 11 auftrifft, zum Empfänger 6 gelangt.

Der Eintrittsspiegel 12 der Empfangsoptik 11 enthält zudem eine Nahbereichsoptik, mit welcher Empfangslichtstrahlen 5, die von Objekten in geringer Distanz zum optischen Sensor 1 angeordnet sind, zum Empfänger geführt sind. Mittels der Nahbereichsoptik wird somit auch bei der Detektion von Objekten in sehr geringer Distanz zum optischen Sensor 1 ein für die Objektdetektion hinreichender Empfangssignalpegel generiert.

Im vorliegenden Fall weist der Eintrittsspiegel 12 drei konzentrisch angeordnete Nachbereichszonen N₁, N₂, N₃ auf, die zwischen einer inneren Fernbereichszone F₁ und einer äußeren Fernbereichszone F₂ des Eintrittsspiegels 12 liegen.

Die Nahbereichszonen N₁, N₂, N₃ sind von ringförmigen Zonen des Eintrittsspiegels 12 mit jeweils einer vorgegebenen Gegenstandsweite f_{N1}, f_{N2}, f_{N3} gebildet, wobei diese geringer sind als die Gegenstandsweiten f_{F1}, f_{F2} der Fembereichszonen, die im vorliegenden Fall gleich groß gewählt sind.

### Bezugszeichenliste

- (1): Optischer Sensor
- (2): Gehäuse
- (3): Sendelichtstrahlen
- (4): Sender
- (5): Empfangslichtstrahlen
- (6): Empfänger
- (7): Umlenkspiegel
- (7a): Grundkörper
- (7b): Aufsatz
- (7c): Schicht
- (8): Austrittsfenster
- (9): Form
- (9a): Aussparung
- (10): UV-Licht
- (11): Empfangsoptik
- (12): Eintrittsspiegel
- (13): Spiegel
- (14): Bohrung
- (15): Tubus
- (16): Steg

## Patentansprüche

1. Optischer Sensor zur Erfassung von Objekten in einem Überwachungsbereich, mit einem Sendelichtstrahlen emittierenden Sender, mit einem Empfangslichtstrahlen empfangenden Empfänger, wobei die Sendelichtstrahlen und die Empfangslichtstrahlen über eine Ablenkeinheit geführt sind und ein Austrittsfenster in einer Frontwand eines Gehäuses durchsetzen, und mit einer Auswerteeinheit, in welcher in Abhängigkeit der Empfangssignale am Ausgang des Empfängers ein Objektfeststellungssignal generiert wird, **dadurch gekennzeichnet, dass** die Ablenkeinheit einen drehbaren Umlenkspiegel (7) aufweist, dessen Spiegelfläche eine vorgegebene Krümmung zur Kompensation von Verzerrungen des Strahlquerschnitts der Empfangslichtstrahlen (5), welche durch den Durchtritt der Empfangslichtstrahlen (5) durch das Austrittsfenster (8) bedingt sind, aufweist, wobei der Umlenkspiegel (7) einen aus Glas bestehenden Grundkörper aufweist, auf dessen Oberfläche ein Aufsatz (7b) aus Diacryl aufgebracht ist, dessen Oberfläche die gekrümmte Spiegelfläche bildet.

2. Optischer Sensor nach Anspruch 1, **dadurch gekennzeichnet, dass** das Austrittsfenster (8) die Form eines Kegelmantelsegments aufweist.

3. Optischer Sensor nach Anspruch 1, **dadurch gekennzeichnet, dass** sich das Austrittsfenster (8) über einen Winkelbereich von 180° bis 190° erstreckt.

4. Optischer Sensor nach einem der Ansprüche 2 oder 3, **dadurch gekennzeichnet, dass** die Spiegelfläche des Umlenkspiegels (7) eine konkave Krümmung aufweist.

5. Optischer Sensor nach einem der Ansprüche 1 bis 4, **dadurch gekennzeichnet, dass** auf die gekrümmte Oberfläche des Aufsatzes (7b) eine reflektierende Schicht (7c) aufgebracht ist.

6. Optischer Sensor nach einem der Ansprüche 1 bis 5, **dadurch gekennzeichnet, dass** der Umlenkspiegel (7) motorisch angetrieben ist.

7. Optischer Sensor nach einem der Ansprüche 1 bis 6, **dadurch gekennzeichnet, dass** der Umlenkspiegel (7) um einen Neigungswinkel von 45° bezüglich seiner Drehachse geneigt ist.

8. Optischer Sensor nach einem der Ansprüche 1 bis 7, **dadurch gekennzeichnet, dass** zur Fokussierung der Empfangslichtstrahlen (5) auf den Empfänger eine als Cassegrain-Objektiv ausgebildete Empfangsoptik (11) vorgesehen ist.

9. Optischer Sensor nach Anspruch 8, **dadurch gekennzeichnet, dass** die Empfangsoptik (11) einen konkaven Eintrittsspiegel (12) mit einer konzentrischen Anordnung von Nahbereichszonen und Fernbereichszonen aufweist.

10. Optischer Sensor nach Anspruch 9, **dadurch gekennzeichnet, dass** der Eintrittsspiegel (12) wenigstens eine Nahbereichszone zwischen einer zentralen und einer äußeren Fernbereichszone aufweist.

11. Optischer Sensor nach Anspruch 9 oder 10, **dadurch gekennzeichnet, dass** die Empfangsoptik (11) einen dem Eintrittsspiegel (12) gegenüberliegenden Spiegel (13) aufweist, wobei an dem Eintrittsspiegel (12) reflektierte Empfangslichtstrahlen (5) über den Spiegel (13) durch eine zentrale Bohrung (14) im Eintrittsspiegel (12) zum Empfänger (6) geführt sind.

12. Optischer Sensor nach Anspruch 11, **dadurch gekennzeichnet, dass** der Spiegel (13) der Empfangsoptik (11) eine konvexe Spiegelfläche aufweist.

13. Optischer Sensor nach Anspruch 12, **dadurch gekennzeichnet, dass** der Spiegel (13) als Hyperboloidspiegel ausgebildet ist.

14. Optischer Sensor nach einem der Ansprüche 10 bis 13, **dadurch gekennzeichnet, dass** auf der Bohrung (14) des Eintrittsspiegels (12) ein sich in Richtung des Spiegels (13) erstreckender lichtundurchlässiger Tubus (15) aufsitzt.

15. Optischer Sensor nach einem der Ansprüche 10 bis 14, **dadurch gekennzeichnet, dass** die Komponenten der Empfangsoptik (11) aus Kunststoff Spritzteilen bestehen.

16. Optischer Sensor nach einem der Ansprüche 1 bis 15, **dadurch gekennzeichnet, dass** der Sender (4) und der Empfänger (6) ein Distanzsensorelement bilden.

## Claims

1. Optical sensor for detection of objects in a monitoring region, comprising a transmitter emitting transmitted light beams, a receiver receiving received light beams, wherein the transmitted light beams and the received light beams are guided by way of a deflecting unit and pass through an exit window in a front wall of the housing, and an evaluating unit in which an object detection signal is generated in dependence on the received signals at the output of the receiver, **characterised in that** the deflecting unit comprises a rotatable deflecting mirror (7), the mirror surface of which has a predetermined curvature for compensation for distortions of the beam cross-section of the received light beams (5) caused by passage of the received light beams (5) through the exit window (8), wherein the deflecting mirror (7) comprises a base body which consists of glass and on the surface of which is applied a covering (7b) of diacryl, the surface of which forms the curved mirror surface.

2. Optical sensor according to claim 1, **characterised in that** the exit window (8) has the form of a segment of a cone envelope.

3. Optical sensor according to claim 1, **characterised in that** the exit window (8) extends over an angular range of 180° to 190°.

4. Optical sensor according to one of claims 2 and 3, **characterised in that** the mirror surface of the deflecting mirror (7) has a concave curvature.

5. Optical sensor according to any one of claims 1 to 4, **characterised in that** a reflective layer (7c) is applied to the curved surface of the covering (7b).

6. Optical sensor according to any one of claims 1 to 5, **characterised in that** the deflecting mirror (7) is motor-driven.

7. Optical sensor according to any one of claims 1 to 6, **characterised in that** the deflecting mirror (7) is inclined by an inclination angle of 45° with respect to its axis of rotation.

8. Optical sensor according to any one of claims 1 to 7, **characterised in that** a receiving optical system (11) constructed as a Cassegrain lens is provided for focussing the received light beams (5) onto the receiver.

9. Optical sensor according to claim 8, **characterised in that** the receiving optical system (11) comprises a concave entry mirror (12) with a concentric arrangement of near region zones and far region zones.

10. Optical sensor according to claim 9, **characterised in that** the entry mirror (12) has at least one near region zone between a sensor and an outer far region zone.

11. Optical sensor according to claim 9 and 10, **characterised in that** the receiving optical system (11) comprises a mirror (13) opposite the entry mirror (12), wherein received light beams (5) reflected at the entry mirror (12) are guided by way of the mirror (13) through a central bore (14) in the entry mirror (12) to the receiver (6).

12. Optical sensor according to claim 11, **characterised in that** the mirror (13) of the receiving optical system (11) has a convex mirror surface.

13. Optical sensor according to claim 12, **characterised in that** the mirror (13) is constructed as a hyperboloid mirror.

14. Optical sensor according to any one of claims 10 to 13, **characterised in that** a light-impermeable tubus (15) extending in the direction of the mirror (13) is seated on the bore (14) of the entry mirror (12).

15. Optical sensor according to any one of claims 10 to 14, **characterised in that** the components of the receiving optical system (11) consist of injection-moulded parts of plastics material.

16. Optical sensor according to any one of claims 1 to 15, **characterised in that** transmitter (4) and the receiver (6) form a distance sensor element.

## Revendications

1. Capteur optique pour la détection d'objets dans une zone de surveillance, avec un émetteur émettant des rayons lumineux d'émission, avec un récepteur recevant des rayons lumineux de réception, les rayons lumineux d'émission et les rayons lumineux de réception étant guidés par une unité de déflexion et traversant une fenêtre de sortie dans une paroi frontale d'un boîtier, et avec une unité d'évaluation dans laquelle, en fonction des signaux de réception à la sortie du récepteur, un signal de détection d'objet est généré, **caractérisé en ce que** l'unité de déflexion présente un miroir de déviation tournant (7) dont la surface réfléchissante présente une courbure prédéfinie pour compenser les distorsions de la section de faisceau des rayons lumineux de réception (5) qui sont dues au passage des rayons lumineux de réception (5) à travers la fenêtre de sortie (8), le miroir de déviation (7) présentant un corps de base en verre à la surface duquel est appliqué un élément rapporté (7b) en Diacryl dont la surface forme la surface réfléchissante courbe.

2. Capteur optique selon la revendication 1, **caractérisé en ce que** la fenêtre de sortie (8) présente la forme d'un segment d'enveloppe de cône.

3. Capteur optique selon la revendication 1, **caractérisé en ce que** la fenêtre de sortie (8) s'étend sur une plage angulaire de 180° à 190°.

4. Capteur optique selon l'une des revendications 2 ou 3, **caractérisé en ce que** la surface réfléchissante du miroir de déviation (7) présente une courbure concave.

5. Capteur optique selon l'une des revendications 1 à 4, **caractérisé en ce qu'**une couche réfléchissante (7c) est appliquée sur la surface courbe de l'élément rapporté (7b).

6. Capteur optique selon l'une des revendications 1 à 5, **caractérisé en ce que** le miroir de déviation (7) est entraîné par un moteur.

7. Capteur optique selon l'une des revendications 1 à 6, **caractérisé en ce que** le miroir de déviation (7) est incliné d'un angle d'inclinaison de 45° par rapport à son axe de rotation.

8. Capteur optique selon l'une des revendications 1 à 7, **caractérisé en ce qu'**il est prévu une optique de réception (11) réalisée sous la forme d'un objectif Cassegrain pour focaliser les rayons lumineux de réception (5) sur le récepteur.

9. Capteur optique selon la revendication 8, **caractérisé en ce que** l'optique de réception (11) présente un miroir d'entrée concave (12) avec une disposition concentrique de zones pour le domaine proche et de zones pour le domaine lointain.

10. Capteur optique selon la revendication 9, **caractérisé en ce que** le miroir d'entrée (12) comprend au moins une zone pour le domaine proche entre une zone pour le domaine lointain centrale et une zone pour le domaine lointain extérieure.

11. Capteur optique selon la revendication 9 ou 10, **caractérisé en ce que** l'optique de réception (11) présente un miroir (13) situé en face du miroir d'entrée (12), les rayons lumineux de réception (5) réfléchis sur le miroir d'entrée (12) étant guidés par le miroir (13) vers le récepteur (6) à travers une ouverture centrale (14) dans le miroir d'entrée (12).

12. Capteur optique selon la revendication 11, **caractérisé en ce que** le miroir (13) de l'optique de réception (11) présente une surface réfléchissante convexe.

13. Capteur optique selon la revendication 12, **caractérisé en ce que** le miroir (13) est réalisé sous la forme d'un miroir hyperboloïde.

14. Capteur optique selon l'une des revendications 10 à 13, **caractérisé en ce qu'**un tube (15) opaque s'étendant en direction du miroir (13) est monté sur l'ouverture (14) du miroir d'entrée (12).

15. Capteur optique selon l'une des revendications 10 à 14, **caractérisé en ce que** les composants de l'optique de réception (11) sont constitués de pièces en matière plastique moulées par injection.

16. Capteur optique selon l'une des revendications 1 à 15, **caractérisé en ce que** l'émetteur (4) et le récepteur (6) forment un élément capteur de distance.
